(19) Europäisches Patentamt
European Patent Office
Office européen des brevets

(11) **EP 4 660 895 A1**

(12) **EUROPEAN PATENT APPLICATION**

(43) Date of publication:
**10.12.2025  Bulletin 2025/50**

(21) Application number: **24180103.4**

(22) Date of filing: **05.06.2024**

(51) International Patent Classification (IPC):
**G06N 10/20** (2022.01)        **G06N 10/60** (2022.01)

(52) Cooperative Patent Classification (CPC):
**G06N 10/20; G06N 10/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Terra Quantum AG**
**9000 St. Gallen (CH)**

(72) Inventors:
• **Haboury, Nathan**
**9000 St. Gallen (CH)**

• **Melnikov, Alexey**
**9000 St. Gallen (CH)**
• **Kordzanganeh, Mo**
**9000 St. Gallen (CH)**
• **Sekatski, Pavel**
**9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**

(54) **A METHOD AND SYSTEM FOR TRAINING HYBRID QUANTUM-CLASSICAL MACHINE LEARNING MODELS**

(57)    A computer-implemented method for training a machine learning model for approximating a labeling function comprising a variational quantum circuit, said method comprising establishing the variational quantum circuit, the variational quantum circuit comprising a plurality of variational quantum gates, and a plurality of encoding gates; executing the variational quantum circuit for a plurality of sample inputs; determining a candidate output for each sample input; determining a quality measure of the candidate outputs for the plurality of sample inputs in view of the labeling function to be approximated by the machine learning model; determining an entropy measure of the candidate outputs determined for each of the sample inputs; and updating the variational parameters based on an update function, the update function including a quality-based loss term based on the quality measure and an entropy-based loss term penalizing excess information on the input data encoded in the candidate output through the entropy measure.

establishing the variational quantum circuit — S10

executing the variational quantum circuit for a plurality of sample inputs — S12

determining a candidate output based on a measurable output state of the variational quantum circuit for the sample input for each sample input — S14

determining a quality measure of the candidate output for the sample input in view of a labeling function to be approximated using the variatonal quantum circuit — S16

determining an entropy measure of the candidate outputs determined for each of the sample inputs — S18

updating the variational parameters based on an update function including a quality-based loss term and an entropy-based loss term — S20

Fig. 3

**EP 4 660 895 A1**

**Description**

FIELD OF THE INVENTION

The present invention is in the field of quantum machine learning. More precisely, the present invention relates to training methods for hybrid quantum-classical machine learning models and associated systems.

BACKGROUND

Quantum computers provide a platform of controllable quantum mechanical systems whose state and interaction can be controlled in order to perform a computation. The computation is realized by a deterministic evolution of the controllable quantum mechanical systems, and the state of the quantum mechanical systems can be measured to determine the outcome of the computation.

The quantum computer generally encodes information in so called qubits, acting as a quantum mechanical equivalent of classical bits. Qubits are physical systems whose quantum mechanical state can be (coherently) controlled and (substantially) preserved between two basis states during the time of a computation, in the following referred to as |0> and |1>. As an example, a qubit may be implemented by encoding information in the spin state of an electron, e.g. in the electron being in an "up" state or a "down" state, but may also be encoded in a polarization state of a photon, in states of a (superconducting) oscillator, in energy levels of an atom, or the like.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In order to compute solutions to problems which are considered intractable on classical computers, a quantum computer can leverage the special properties of quantum mechanical states, in particular the superposition and entanglement of different quantum states, to find solutions with a comparatively low number of calculation steps or access a large internal state space.

However, the superposition/entangled states of quantum mechanical systems are inherently volatile (e.g. suffer from decoherence) and the control and measurement of these systems is subject to fidelity margins, such that state-of-the-art quantum computers are currently limited both in the number of controllable quantum mechanical systems (qubits) as well as the number of successively performed control actions (quantum gates).

Despite these shortcomings, promising applications for near term available quantum processors exist, i.e. noisy intermediate-scale quantum (NISQ) devices, such as variational quantum algorithms. In variational quantum algorithms, the action of the quantum gates is parametrized in terms of variational parameters, and the variational parameters may be systematically varied with the help of a classical computing resource, in a manner analogous to machine learning, e.g. by implementing a kernel method for classifying an input using a variational quantum circuit. By varying the variational parameters to extremize a cost/loss function, which attributes a cost to the output of the variational quantum circuit with respect to an optimal solution, an output of the variational quantum circuit can be "trained" to provide an optimal solution to an unseen set of inputs. In these applications, entanglement between different qubits may give access to a large internal state space to provide "quantum advantage".

SUMMARY OF THE INVENTION

The known methods and systems which implement machine learning type models with variational quantum circuits however often suffer from low prediction accuracy for a target function and failure to generalize the provided training data, and the barren plateau problem, in which the machine learning model may remain stuck in a local minimum without providing optimal performance. At the same time, the training time can be long, e.g. based on the execution time of the machine learning model, and may limit an efficient training.

In view of this state-of-the-art, the object of the invention is to provide a method for training a machine learning model and corresponding systems which can overcome problems related to low accuracy and improve generalization and training speed.

This object is solved by a method and system according to the independent claims. The dependent claims relate to preferred embodiments.

According to a first aspect, a computer-implemented method for training a machine learning model comprising a variational quantum circuit for approximating a labeling function is provided. The method comprises establishing the variational quantum circuit, the variational quantum circuit comprising a plurality of variational quantum gates, whose action on qubits of the variational quantum circuit is based on associated variational parameters, and a plurality of encoding gates for encoding a sample input in a quantum state of the qubits. The method further comprises executing the variational quantum circuit for a plurality of sample inputs, determining a candidate output based on a measurable output state of the variational quantum circuit for each sample input, and determining a quality measure of the candidate outputs for the plurality of sample inputs in view of the labeling function to be approximated by the machine learning model. The method further comprises determining an entropy measure of the candidate outputs determined for each of the sample inputs, and updating the variational parameters based on an update function, the update function including a quality-based loss term based on the quality measure and an entropy-based loss term penalizing excess information on the input data encoded in the candidate output through the entropy measure.

The inventors observed that a quantum computational system can significantly differ from a classical system by the size of the available state space, which in principle can grow exponentially with the number of qubits and the number of operations. As a result, the quantum state of the qubits of a variational quantum circuit may include a representation of the input data which can grow in complexity, as the variational quantum circuit is executed, without selecting any specific information. Rather, when the quantum state is measured, the measurement projects the internal quantum state on the output basis based on the quantum state prepared prior to measurement.

In many variational quantum circuits, input samples are encoded multiple times during execution of the variational quantum circuit as part of a so called "data-reuploading" method, such that the information on the input samples tends to grow during execution of the quantum circuit. Although the measurement discards information during the projection on the measurement basis, the availability of the large state space may still give rise to overfitting, such that the machine learning model based on a quantum circuit may poorly generalize input data not previously presented during training.

To avoid overfitting, an efficient mapping should approximate a given labeling function mapping an input "X" to a target output "Y" in training data only to a certain degree. Preferably, the output of the machine learning model may feature minimal sufficient statistics, such that for any input "X", the compressed representation predicted by the machine learning model "Z=f(X)" carries minimal information on the input.

The inventors found that an entropy-based loss term penalizing excess information on the input data encoded in the predicted candidate output through an entropy measure of the candidate output may improve both convergence speed and testing accuracy of machine learning models, i.e. the ability of the machine learning model to predict a suitable candidate output for inputs not encountered during the training of the machine learning model. The excess information may be penalized based on an estimated and/or optimal converged value of the entropy measure, with the converged value estimated e.g. based on output labels for the sample inputs in training data, and the entropy-based loss term may be based on a difference between the observed entropy measure during training and an estimated converged value of the entropy measure. The update may minimize a loss function including the quality-based loss term based on the quality measure and the entropy-based loss term.

Preferably, an influence of the entropy measure on the value of the loss/update function is tuned based on the quality measure. Thus, a magnitude of the update may depend primarily on the quality measure. The tuning of the influence of the entropy measure may include multiplication or division of the entropy measure and the quality measure, or a gradient thereof, such that the value of a corresponding loss term is adjusted based on the value of the quality measure. In particular, the entropy measure may be non-negative, and a loss term including the entropy measure tuned by the quality measure is preferably added to a loss term including the quality measure without the entropy measure as part of the loss function.

Thus, the entropy term may promote the convergence of the variational parameters towards minimal sufficient statistics of the machine learning model during training, and was observed by the Inventors to result in favorable properties of the training function as well as the resulting machine learning model. The entropy-based loss term and a quality-based loss term based on the quality measure may be summed as part of the loss function.

The quality measure may quantify a prediction accuracy of the candidate output for approximating the labeling function, and may be based on any suitable loss function known in the art, such as the mean squared error between the candidate output and the corresponding target output or a logistic loss between the probability distributions of the candidate output and the corresponding target output over the sample inputs, also called the cross-entropy. Conversely, the entropy measure may not quantify a prediction accuracy of the candidate output for the labeling function.

The method includes establishing the variational quantum circuit including a plurality of variational quantum gates, with associated variational parameters specifying an action of the variational quantum gates on qubits of the variational quantum circuit. For example, the variational quantum gate may be implemented as a single qubit gate, such as a rotation gate, which may manipulate the quantum state of one of the qubits with a magnitude of the action parametrized by the variational parameter, e.g. a rotation angle proportional to the variational parameter for inducing a state rotation about some axis on the Bloch sphere.

The machine learning model may be defined in terms of a quantum circuit architecture, e.g. including a number of qubits as well as an arrangement of encoding gates, variational quantum gates and multi quantum gates to form a variational quantum circuit, optionally in terms of a specific hardware implementation. The machine learning model may further include the variational parameters or any parametrization or implementation parameters thereof. The machine learning model may further define how an input for the labeling function, e.g. a feature vector, is encoded through the action of the encoding gates in the quantum state of the qubits, e.g. based on a chosen encoding strategy and/or scaling functions, and may further define how a (measured) candidate output of the variational quantum circuit is transformed towards a label of the labeling function, such as a function value or output class.

The machine learning model can be implemented as part of a hybrid quantum-classical quantum computation system, which can include classical processing resources and quantum hardware, which may include qubits and hardware for manipulating and measuring the state of the qubits according to the variational quantum circuit. The classical processing resources can be configured to control the quantum hardware to implement the machine learning model and/or to implement a training of the hybrid quantum-classical machine learning model according to the first aspect, e.g. by determining updates of the variational parameters based on measured outputs of the variational quantum circuit. As a result, the machine learning model may be considered a hybrid quantum-classical machine learning model.

Initial variational parameters for the variational quantum gates can encode an initial (random) guess for predicting the labeling function, and the outcome of the evaluation of the variational quantum circuit with the variational parameters can be measured (repeatedly) to determine a corresponding feature vector as the candidate output. Based on the candidate output, a loss function may be classically evaluated to attribute a loss to the candidate output (or a label derived therefrom), or in other words, a measure is calculated of how good the label/candidate output is in view of the labeling task (approximating the labeling function).

In an implementation of the variational quantum circuit in quantum hardware, the candidate output is generally obtained through a measurement of output states of the qubits involved in the execution of the variational quantum circuit, e.g. a projective measurement of the qubit states onto some basis, e.g. the "Z"-basis.

In some examples, the candidate output is determined based on a measurement outcome of a projective measurement of a quantum state of qubits of the variational quantum circuit.

The measurement can be repeated to obtain expectation values for the projective measurement. The candidate output may subsequently be determined based on the measured outcome, e.g. as a function of the measured outcome or based on further processing of the measured outcome, e.g. by a (classical) machine learning model.

Usually, the variable parameters are subsequently updated (iteratively) using a feedback-loop implemented in a classical processing system, e.g. based on an (iterative) optimization algorithm, such that the candidate output approaches an optimal solution, i.e. an optimal label given the labeling function, making the overall method including the operation of the variational quantum circuit and its control/optimization a hybrid quantum-classical algorithm.

By training the system, the variational parameters may be systematically varied in an iterative manner, such that the variational quantum circuit approximates the labeling function.

Training the hybrid quantum-classical machine learning model may generally comprise determining a loss associated with a labeling result of the hybrid quantum-classical machine learning model for a given input feature vector of a set of training data based on some quality measure for the labeling result, and determining an update to the variational parameters of the hybrid quantum-classical machine learning model based on the loss.

The variational parameters may be updated with known techniques employed in classical machine learning, such as gradient based optimization algorithms, e.g. stochastic gradient descent or adaptive moment estimation, or gradient free optimization, such as simulated annealing. Preferably, the optimization algorithm is gradient based, and the method may comprise determining a gradient of the variational parameters with respect to the loss attributed to the candidate output by the loss function, e.g. based on determining partial derivatives of the loss function, in particular of the quality based loss-term, with respect to the variational parameters, which may be determined by executing the variational quantum circuit with shifted variational parameters.

However, in addition to standard techniques of variational parameter update determination, the method of the first aspect can determine an entropy measure for a plurality of candidate outputs, which may promote a convergence of the variational parameters towards minimal sufficient statistics when included in the loss function.

In some examples, the update function comprises a multiplication of the entropy measure and the quality measure, or a gradient thereof.

By multiplying the entropy measure and the quality measure as a tuning of the influence of the entropy measure on the value of the update/loss function, the entropy measure can be rescaled by the quality measure, which can avoid the machine learning model converging towards a trivial solution which features minimal sufficient statistics but fails to approximate the labeling function. Preferably, the entropy-based loss term is non-negative, and the quality-based loss term may not depend on the entropy measure.

In some examples, the update function is based on a loss function mathematically equivalent and/or proportional to

$$\mathcal{L} := L_Q \times (1 + \alpha L_E) \tag{1}$$

wherein $L_Q$ is the quality-based loss term based on the quality measure, $L_E$ is the entropy-based loss term based on the entropy measure and $\alpha$ is a contribution factor, wherein $\alpha$ is in particular smaller than 100.

The contribution factor $\alpha$ may be adjusted as a hyperparameter during training, such as to adjust an influence of the entropy-based loss term on the loss function, e.g. depending on the labeling function to be approximated. The contribution factor $\alpha$ may be constant during training or may be adjusted, e.g. as a function of the number of training epochs, with training epochs generally be defined by the presence of training data presented during a previous training epoch and/or by performing an update of the variational parameters.

In some examples, the contribution factor $\alpha$ is constant or dynamically increases during training, wherein an increase of the contribution factor is in particular based on the number of training Epochs and/or wherein an increase of the contribution factor is superlinear, in particular an exponential function of the number of training epochs at least for a portion of the training.

For example, the contribution factor $\alpha$ may be at a first low value, e.g. zero, for the first training epoch, and may be at a second higher value at another later training epoch. The contribution factor $\alpha$ may increase (e.g. monotonically) according to a contribution function of the training epochs, e.g. a linear or superlinear function, and may saturate at a final maximum value greater than the first low value after a predefined number of training epochs.

An increasing contribution factor $\alpha$ may promote an initial training to focus on the quality of the candidate output with later training epochs increasingly favoring discarding additional information towards minimal sufficient statistics.

In some examples, the entropy measure is based on a statistical property of a plurality of the candidate outputs, wherein the entropy measure is in particular not indicative of a quality of the candidate output for approximating the labeling function given the sample input.

For example, the entropy measure may be solely based on the statistical property of the output, such as the Shannon entropy of the plurality of candidate outputs.

The entropy-based loss term may be based on a deviation of the statistical property from an estimated converged value.

The converged value may be a statistical property of the target output in training data, such as the Shannon entropy of the target output in training data.

In some examples, the entropy measure is based on the mutual information (MI) of the candidate output and the sample input, in particular mathematically equivalent and/or proportional to

$$I(X : Z) = I(Z : X) = H(X) + H(Z) - H(X, Z) \tag{2}$$

wherein X are the sample inputs, Z are the candidate outputs, and H is the Shannon Entropy H(x)= E(log p(x)).

The mutual information may be considered to quantize the amount of information which one variable ("X") holds on the other ("Z"). By minimizing the entropy measure based on the mutual information, the resulting machine learning model may learn to discard information on X, which is not necessary to predict Z.

Preferably, the entropy-based loss term of the loss function is adjusted based on an estimated value of the mutual information for the converged machine learning model.

In some examples, the entropy-based loss term is based on a loss term mathematically equivalent or proportional to

$$L_{E*} := (I(Z:X) - I_*), \tag{3}$$

or an absolute value thereof, wherein I* is the expected converged value of the mutual information between the candidate outputs Z and the sample inputs X, and wherein the entropy-based loss term is in particular mathematically equivalent or proportional to

$$L_E := (I(Z:X) - I_*)^2. \tag{4}$$

The expected converged value of the mutual information between the candidate outputs Z and the sample inputs X may be estimated based on the expectation that a model close to minimal sufficient statistics nearly saturates the inequalities $I(Z:Y) \leq I(X:Y)$ and $I(Z:Y) \leq I(Z:X)$. Thus, $I_*$ may be estimated to be $I_*=I(X:Y)$, i.e. the mutual information of the sample inputs and the associated target outputs in training data, which can be calculated prior to training based on training data alone.

In case all data points X are different, the expected converged value can be further simplified to I*= H(Y), i.e. the (Shannon) entropy of the target output in training data.

In some examples, the expected converged value of the mutual information between the candidate outputs Z and the sample inputs X is approximated by the mutual information between the sample inputs X and a plurality of target outputs Y for the sample inputs according to the labelling function, in particular approximated as the entropy of the target outputs.

In case all sample inputs in training data are different, the encoding of X to Z is deterministic and the mutual information may equally be independent of the sample inputs, as H(X)=H(X, Z)=log (n), with n being the number of sample inputs, such that the mutual information as the entropy measure may be essentially given by the (e.g. Shannon) entropy of the candidate outputs.

In some examples, the sample inputs are different and the entropy measure is independent of the sample inputs, and in particular an entropy measure of the plurality of candidate outputs.

As a result, the entropy-based loss term may be independent of the sample inputs.

In some examples, the entropy-based loss term is based on a difference between an entropy of the candidate outputs and an entropy of target outputs for the sample inputs in training data, in particular the difference between the Shannon entropy of the candidate outputs and the target outputs.

With the entropy-based loss term based on the difference between the entropy of the candidate outputs and of the target outputs, the entropy-based loss term can be zero for minimal sufficient statistics.

In some examples, the candidate output is discretized into a plurality of intervals, and the entropy measure is determined based on the plurality of intervals discretizing the candidate output.

Generally, the candidate output may be composed of continuous values, e.g. based on measured angles of a z-projection of the quantum state of qubits. The candidate output may be binned, e.g. into a plurality of angle intervals, such as to provide a plurality of discretized candidate output states, e.g. six different angle intervals, or "up" and "down". The entropy measure may be determined for the discretized candidate output states.

Preferably, the discretized candidate output states is greater than the number of measured states of the respective qubits, i.e. up and down. For example, for each qubit, the averaged result may be binned into a number of discretized candidate output states greater than two, such as 4 or 6.

The number of intervals for determining the discretized candidate output states may be greater than the number of intervals indicative of an output label of the labeling function. For example, the label may be defined based on a number of basis states of the qubits, such as a combination of "up" and "down" of the qubits, while the discretized candidate output states may provide a plurality of intermediate states which is greater than the number of basis states. As a result, the entropy-based loss term may promote convergence towards clearer indication of specific outputs, thereby discarding additional information on the input encoded in the measured output state and/or reducing variance of the candidate output.

It is noted that the discretized candidate output states, on which the update function may be based, can feature a vanishing gradient outside of steps between the discretized values. As a result, the direction of the gradient of the loss function and the general shape of the energy landscape may be dominated by the quality based loss term, while the entropy based loss term may effectively enhance the gradient, when the machine learning model is far from a "compressed state", i.e. features a high entropy measure value compared to the expected converged value. Thus, the update function may in practice be based on the partial gradient

$$\nabla_\theta \mathcal{L} = \left(\nabla_\theta L_\mathrm{Q}\right) \times \left(1 + \alpha L_\mathrm{E}\right),$$

in which the entropy-based loss term $L_\mathrm{E}$ may effectively be an entropy-based scaling term for dynamically scaling a gradient of the quality-based loss term, e.g. for dynamically scaling an update magnitude of the update function based on the entropy-based loss term. Thus, in some examples, the loss function may be minimized without calculating a gradient of the entropy-based loss function as part of evaluating the update function.

The method may comprise obtaining a set of training data as discretized point representing the labeling function, e.g. for supervised learning, and may further comprise obtaining a set of validation data as further discretized points representing the labeling function. A discretized point of training/validation data may be considered to include a set of input data values, such as a vector of input features, and may further comprise a corresponding label recorded for the input data in the training/validation data for the set of input data values as a target output.

The machine learning model may be trained based on the training data and tested based on the validation data, and hyperparameters of the training, such as a contribution factor determining an influence of the entropy measure on the training outcome, may be varied based on the validation loss when the trained machine learning model is applied to predict the labeling function for the validation data.

According to a second aspect, a system for training a machine learning model including a variational quantum circuit for approximating a labeling function is provided. The system comprises a processing system based on classical hardware configured to establish the variational quantum circuit, the variational quantum circuit comprising a plurality of variational quantum gates, whose action on qubits of the variational quantum circuit is based on associated variational parameters, and a plurality of encoding gates for encoding a sample input in a quantum state of the qubits, and train the machine learning model based on a variation of the variational parameters for a plurality of sample inputs. The processing system is configured to, for each sample input, determine a candidate output based on a measurable output state of the variational quantum circuit for the sample input, and determine a quality measure of the candidate outputs for the plurality of sample inputs in view of the labeling function to be approximated by the machine learning model. The processing system is further configured to determine an entropy measure of the candidate outputs determined for each of the sample inputs with respect to the plurality of sample inputs, and update the variational parameters based on an update function, the update function including a quality-based loss term based on the quality measure and an entropy-based loss term penalizing excess information on the input data encoded in the candidate output through the entropy measure.

In some examples, the variational quantum circuit is implemented in quantum hardware and wherein the processing system is configured to specify a quantum circuit architecture and/or variational parameters for implementing the machine learning model.

For example, the processing system may specify a number of qubits of the variational quantum circuit and a sequence of quantum gates as part of implementing the variational quantum circuit. In some examples, the processing system is configured to obtain a set of training data as discretized points representing the given labeling function.

In some examples, training the machine learning model comprises iteratively optimizing the variational parameters of the machine learning model to minimize a loss of the machine learning model when tasked with providing a labeling result given an input feature vector of a set of training data.

The system may implement the method according to the first aspect or any combination of its embodiments. In particular, the system according to the second aspect may also benefit from any feature of the preferred embodiments of the first aspect.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may comprise multiple servers for executing the respective steps, but the processing steps may equally be executed by a single server or a server system, which may distribute internal computations over multiple processing devices.

The system may be implemented with a classical processing system, which may comprise classical processing resources processing binary features based on a deterministic algorithm, and a quantum processing system implemented with a plurality of computation qubits which can be coherently manipulated with control operations. The quantum processing system may comprise hardware for implementing quantum gates, such as by controlling an evolution of a state of a qubit, e.g. through controlling an action of function generators or lasers on the computation qubits. The classical processing system may determine the quantum circuit, the variational parameters, an encoding gate action based on input features, or a combination thereof, and may initiate or control an action of the hardware for manipulating the quantum state of the computation qubits. The classical processing system may receive and process a measured output of the variational quantum circuit, and may determine updated variational parameters or an output label based on the measured output.

According to a third aspect, a computer program is provided comprising machine-readable instructions, which when the computer program is executed by a processing unit cause the processing unit to implement a method according to the first aspect and/or a system according to the second aspect.

The computer program may be provided on a non-transitory machine readable medium. Thus, a non-transitory medium may be provided comprising machine-readable instructions, which, when executed by a processing system, implement a method according to the first aspect and/or a system according to the second aspect.

The machine-readable instruction may coordinate a training of the hybrid quantum-classical computation model, or may implement a hybrid quantum-classical computation system for approximating a given labelling function based on previously obtained trainable parameters.

The machine-readable instructions may configure the variational quantum circuit, e.g. by determining an architecture or variational parameters of the variational quantum circuit and by instructing quantum manipulation hardware, such as function generators, laser control hardware, or the like for controllably manipulating a state of qubits in quantum hardware, to implement the variational quantum circuit. During an implementation of the system or method, the computer program may provide an input vector of features to the variational quantum circuit and may receive measured outputs of the variational quantum circuit.

In some examples, the machine-readable instructions determine parameter updates for the variational parameters.

The skilled person will appreciate that the disclosed methods and systems apply favorably to machine learning models including variational quantum circuits. However, the loss function may similarly be advantageously employed to improve convergence of entirely classical machine learning models.

According to a fourth aspect, a computer-implemented method for training a machine learning model is provided. The method comprises training the machine learning model based on a plurality of sample inputs, determining a candidate output based on an output state of the machine learning model for each sample input, and determining a quality measure of the candidate outputs for the corresponding sample inputs for approximating a labeling function to be approximated by the machine learning model. The method further comprises determining an entropy measure of the candidate outputs determined for each of the sample inputs, and updating the variational parameters for minimizing a loss function, the loss function including a quality-based loss term based on the quality measure and an entropy-based loss term penalizing excess information on the input data encoded in the candidate output through the entropy measure.

The machine learning model may comprise an artificial neural network, such as a deep neural network, or similar models processing an input based on trainable weights to obtain an output label/feature vector. The weights of the artificial neurons may replace the variational parameters in method according to the first aspect, and the activations of the last layer of artificial neurons may be used to determine a candidate output. Sample inputs may be encoded as input feature vectors in the artificial neural network with known techniques.

Further, although the examples highlight the Shannon entropy as an entropy measure for characterizing the compression of information and/or for calculating a measure of mutual information of the output and the input, other entropy measures may equally be used in embodiments. Although the examples given above pertain mostly to supervised learning approaches, the methods, system, and computer program are not limited to such applications.

DETAILED DESCRIPTION OF EMBODIMENTS

The features and numerous advantages of the method and system according to the present invention will best be understood from a detailed description of preferred embodiments with reference to the accompanying drawings, in which:

Fig. 1          schematically illustrates an example of a hybrid quantum-classical computation system for implementing and driving a variational quantum circuit;

Fig. 2          schematically illustrates another example of a hybrid quantum-classical computation system for implementing and driving a variational quantum circuit;

Fig. 3          illustrates a flow diagram of a method for training a machine learning model including a variational quantum circuit to approximate a given labeling function;

Figs. 4          illustrates an example dataset as a labeling function with a three-dimensional plot of data points;

Figs. 5a)-c)     illustrate an example architecture for a variational quantum circuit used for approximating the labeling function illustrated in Fig. 4;

Fig. 6A          illustrates the test accuracy of the trained machine learning model based on the variational quantum circuit shown in Fig. 5;

Fig. 6B          illustrates the number of steps required for the machine learning model to converge to its maximum test accuracy, with the same configuration of the variational quantum circuit and test conditions as in Fig. 6A;

Fig. 7          illustrates additional results of the number of steps required for the machine learning model to converge to its maximum test accuracy shown in Fig. 6B;

Fig. 8          illustrates the mutual information on the label and the mutual information on the input data as a function of the training epochs when the model shown in Fig. 5 is used to classify the data illustrated in Fig. 4;

Fig. 9A, 9B     illustrate the test accuracy and convergence speed of the trained machine learning model, respectively, based on the variational quantum circuit shown in Fig. 5 with a dynamic contribution factor $\alpha$ plotted against the value of the contribution factor $\alpha$; and

Fig. 10A, 10B     illustrate plots of the training and test accuracy ratio for static and dynamic contribution factor $\alpha$ values, respectively.

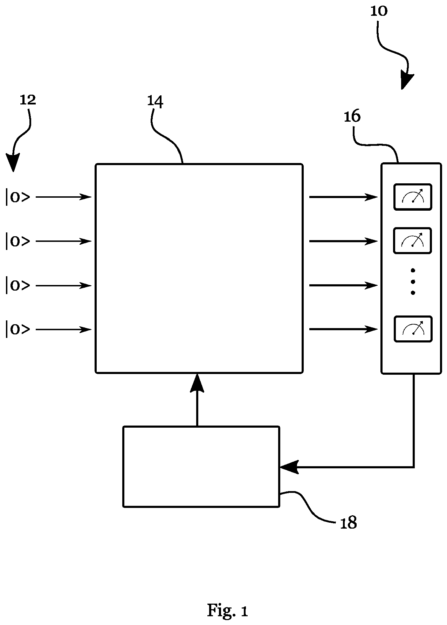

Fig. 1 schematically illustrates an example of a hybrid quantum-classical computation system 10 for implementing and driving a variational quantum circuit, according to a schematic quantum circuit diagram. The schematic quantum circuit diagram depicts an evolution of quantum states from left to right for an exemplary number of computation qubits, wherein control operations on the qubits can be arranged along lines of qubit state evolution to indicate an architecture or time-sequence associated with the quantum circuit. The skilled person will appreciate that additional coherent operations may be included as part of the quantum circuit, and the quantum circuit may be extended to an arbitrary number of qubits. Further, although reference may be made to specific control operations in the following description, the skilled person will appreciate that different control operations may be used to implement the system and methods of the present disclosure, e.g. depending on the physical representation of the qubits.

The illustrated system 10 of Fig. 1 comprises a qubit register 12 comprising a plurality of computation qubits. A plurality of quantum gates 14 may act on the computation qubits of the qubit register 12 to perform a computation/controlled evolution, wherein variable actions of the plurality of quantum gates 14 may be parametrized by variational parameters. The outcome of the computation may be measured by a measurement sensor 16 which projects the states of the computation qubits onto the computational basis states of the hybrid quantum-classical computation system 10. The outcome can be received by a control system 18.

The control system 18 may be configured to repeatedly perform a computation sequence. The computation sequence may comprise initializing the computation qubits of the qubit register 12 before each computation, such as into the ground state of each computation qubit, e.g. to form an initial state of the computation qubits of | oo...o>. The initialization of the computation qubits into their respective ground state may in some examples comprise a relaxation process, and the initialization of the computation qubits may not require active control of the computation qubits.

The control system 18 may then apply the plurality of quantum gates 14 to the computation qubits of the qubit register 12 to drive a coherent evolution of the computation qubits. The control system 18 may optionally produce superposition states of all computation qubits, e.g. by applying a Hadamard gate to each of the computation qubits, and may subsequently apply the plurality of quantum gates 14 including variational quantum gates with the variable actions.

In variational quantum circuits, the action of at least some of the quantum gates in the variational quantum circuit is parametrized, such that a measured output of the computation qubits is a function of variational parameters parametrizing variable actions of the variational quantum gates, such as a rotation angle. The combined action of the at least partially parametrized quantum gates may be termed a variational quantum circuit.

Following the coherent evolution, the state of the computation qubits in the qubit register 12 may be measured with the sensor 16. The measurement sensor 16 may be a plurality of single qubit state detectors for measuring the state of each computation qubit following the evolution according to the plurality of quantum gates 14. Repeating the measurement may allow determining the probability of each measurement outcome and the result may be employed for assigning an output label or candidate output to an input vector of features. On the basis of the measured output, the control system 18 can classically calculate an "energy"/"cost"/"loss" of the label with a cost/loss function based on a labeling task. The labeling task may be specified according to a function, which assigns a loss to the measured output or the output label derived therefrom, or may be specified according to pairs of sample input vectors of features and sample target labels, e.g. as points of training data representing a labeling function, wherein the loss may be based on a difference between the output label and the sample target label.

Conventionally, the control system 18 may repeat the computation sequence with adjusted variable actions based on the outcome, such as to progressively improve the quality of an output label associated with the measured outcome. For example, the control system 18 may repeat the computation sequence with adjusted operation parameters for the variational quantum gates in order to determine a gradient or energy landscape associated with the plurality of quantum gates 14 from the measured outcomes and may update the variational parameters based on the estimated gradient in order to progressively adjust the variational quantum circuit towards an improved solution.

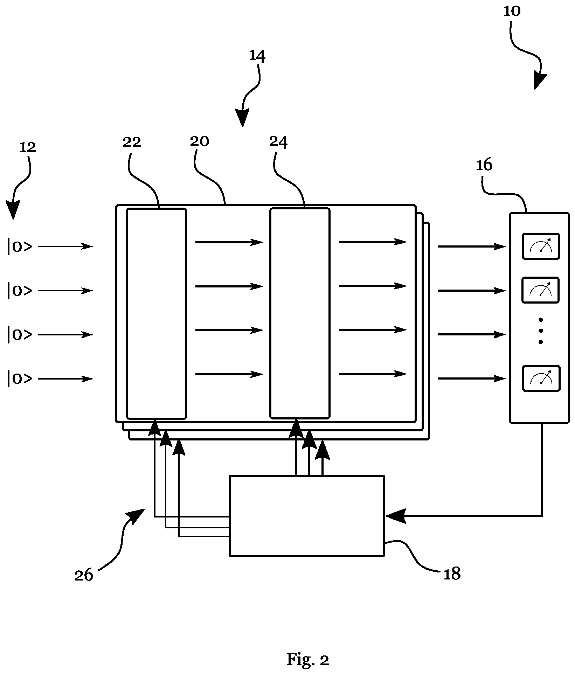

Fig. 2 illustrates another example of a hybrid quantum-classical computation system 10 for implementing and driving a variational quantum circuit. The system 10 comprises a qubit register 12 comprising a plurality of computation qubits. A plurality of quantum gates 14 are arranged in layers of quantum gates 20, which may act on the computation qubits of the qubit register 12 in sequence to perform a computation. Each layer of quantum gates 20 can comprise an encoding layer 22 and a variational layer 24, wherein the variational layer 24 comprises a plurality of variational quantum gates whose actions may be parametrized by different variational parameters in each layer of quantum gates 20. The encoding layer 22 comprises a plurality of encoding gates whose action is parametrized based on values of an input vector of features to be labeled according to a given labeling task. The encoding layer 22 in different layers of quantum gates 20 may be based on different sub-vectors 26 of the input vector of features, such that different layers of quantum gates 20 may encode different values of the input vector of features into the states of the computation qubits. However, in some examples, different layers of quantum gates 20 may encode the same features or the same features multiplied by different scaling factors, such as to effectively fit a higher Fourier series to the respective features of the input vector as part of a data-reuploading scheme. Each layer of quantum gates 20, e.g. as part of each variational layer 24, may comprise multi-qubit gates for entangling the states of different computation qubits of the qubit register 12, such as a plurality of CNOT gates, as entangling gates for entangling quantum states of at least two qubits of the computation qubits.

The application of the variational layer 24 to the states of the computation qubits 24 after the action of the encoding layer 22 may prepare the quantum states of the computation qubits for the encoding of a different feature of the input vector of features in the next layer of quantum gates 20, or for encoding the same feature multiple times, optionally with a scaling factor applied to the value of the feature.

To encode the values of the input vector of features into the quantum Hilbert space, the "angle embedding" method can utilized, which involves rotating the respective qubit around an axis, such as the Z-axis (it can also be the X or Y-axis) on the Bloch sphere by an angle proportional to a value corresponding the respective feature.

The subsequent application of a plurality of layers of quantum gates to the qubits may form the variational quantum circuit, with the variational quantum circuit being parametrized by variational parameters for each layer. Each layer of quantum gates may comprise an entangling gate for each of the computation qubits, such as to create a superposition state of the computation qubits. In some examples, each layer of quantum gates is configured to entangle the states of each computation qubit with at least one other qubit of the computation qubits. In some examples, each layer comprises a plurality of entangling gates to create a superposition state of all the computation qubits.

The outcome of the computation may be measured by a measurement sensor 16 after all layers of quantum gates 20 have acted on the computation qubits, wherein the measurement sensor 16 may project the states of the computation qubits onto the computational basis states of the hybrid quantum-classical computation system 10. Based on a measured output, which may be determined based on a measurement outcome obtained with the measurement sensor 16 or based on the measurement outcomes obtained with the measurement sensor 16 in multiple repetitions of applying the variational quantum circuit to the computation qubits, the control system 18 may determine an output label for labeling the input vector of features according to the given labeling task. Measuring the computation qubits multiple times may allow determining probabilities of measuring each of the computational basis states of the qubits for the quantum state produced by the application of the plurality of quantum gates.

The variational parameters should be optimized for predicting an optimal output label for the input vector of features in view of the labeling task according to a training algorithm, which may be an iterative process of updating the variational parameters according to an estimated gradient associated with the plurality of quantum gates 14. However, the Inventors found that appropriately adjusting the loss function to discard excess information may provide benefits for the training process as well as the trained machine learning model.

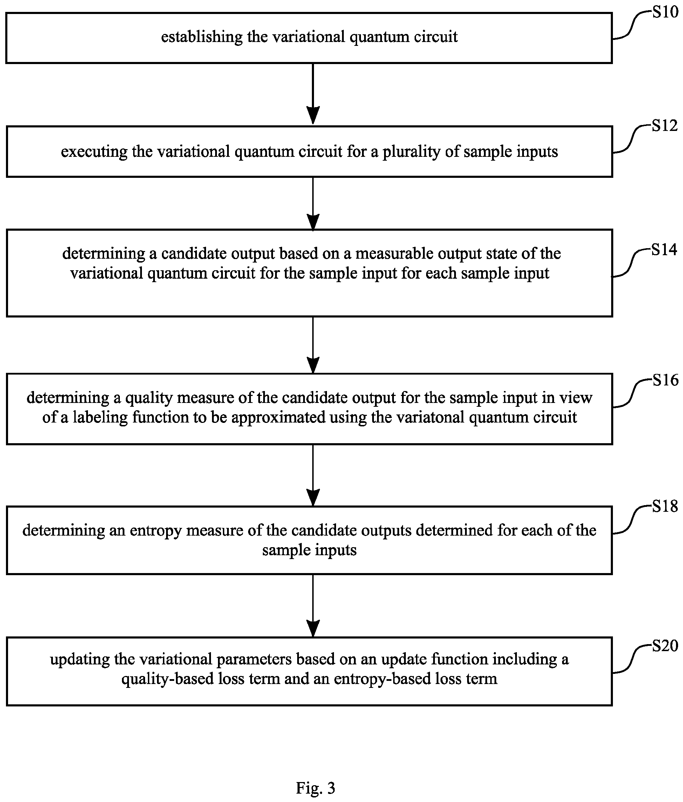

Fig. 3 illustrates a flow diagram of a method for training a machine learning model including a variational quantum circuit to approximate a given labeling function. The method comprises establishing the variational quantum circuit (S10), and executing the variational quantum circuit for a plurality of sample inputs (S12), the variational quantum circuit comprising a plurality of variational quantum gates, whose action on qubits of the variational quantum circuit is based on associated variational parameters, and a plurality of encoding gates for encoding a sample input in a quantum state of the qubits. The method further comprises determining a candidate output based on a measurable output state of the variational quantum circuit for each sample input (S14), and determining a quality measure of the candidate output for the sample input in view of the labeling function to be approximated using the variational quantum circuit (S16); The method further comprises determining an entropy measure of the candidate outputs determined for each of the sample inputs (S18) and updating the variational parameters for minimizing a loss function including a quality-based loss term and an entropy-based loss term (S20), the quality-based loss term being based on the quality measure and the entropy-based loss term penalizing excess information on the input data encoded in the candidate output through the entropy measure.

The training algorithm for training the hybrid quantum-classical machine learning model may comprise applying the variational quantum circuit to a vector of features representing one point of training data as a sample input. The quality measure may quantify a loss associated with an output label for the sample input vector of features and an optimal label recorded in the training data for the sample input vector of features, wherein the output label is based on a measured output state of the variational quantum circuit for the input vector of features, also referred to as candidate output or predicted output.

The update may be determined based on the loss function for all points (e.g. sample inputs and corresponding target labels) of the training data, and applying a cumulative update for all points of the training data may complete a training epoch of an iterative training algorithm. As an example of determining the update, the variational quantum circuit may be executed with shifted variational parameters for determining a partial derivative of the loss function, and the variational parameters of the variational quantum circuit may be updated based on the partial derivative, e.g. in a manner similar to stochastic gradient descent.

The training goal may be to find a machine learning model implementing the function $f$ that infers the value of the variable $Y$ (the optimal label) encoded in the input $X$ (the input data) with high accuracy. In other words, $f$ should distill a compact representation of input data $X$ that retains vital information on the label Y while discarding all irrelevant details. For a labeled data set $(x_i, y_i)$ this task can be understood as approximating the minimal sufficient statistics f. Thus, the training goal may be seen as finding a function f : $X \to Z = f^*(X)$ that is sufficient, i.e. $p(Y|X)=p(Y|Z)$, and minimal, i.e. $Z$ can be reconstructed from any other sufficient statistics.

For the task of finding the correct machine learning model, the learning process can be understood as the convergence of an initial (random) ansatz to the minimal sufficient statistics. The convergence may be captured by the dynamics of the mutual information (MI) provided in Eq. (2) between the input data $X$, the label $Y$, and the compressed representation of data $Z=f(X)$, e.g. a predicted value as inferred from the measured output of the qubits, describing how much information one variable carries about the other. For sufficient statistics the data processing inequality $I(X:Y) \geq I(Z:Y)$ is saturated, while a minimal sufficient statistics should minimize $I(Z:X)$ in addition.

Driving the machine learning model towards convergence with minimal sufficient statistics may improve generalization of the machine learning model and may speed up the learning process, with the mutual information used as an entropy measure for quantifying excess information on the input data in the following.

Specifically, in the following examples, the machine learning model is trained based on direct feedback of the information on the data $1(Z:X)$ into the loss function to pressure the hardware to converge to minimal sufficient statistics. The feedback is based on a mutual information based loss term

$$\mathrm{L}_{\mathrm{MI}} := (I(Z:X) - I_*)^2 \qquad (4)$$

which penalizes the deviation of the mutual information $I(Z:X)$ between the sample inputs ("$X$") and the predicted value ("$Z$") from its "converged" value $I^*$ that one would hope to obtain for a learned variational quantum circuit. To estimate $I^*$, note that for a machine learning model that is close to a minimal sufficient statistics, the inequalities $I(Z:Y) \leq I(X:Y)$ and $I(Z:Y) \leq I(Z:X)$ are expected to be nearly saturated, as the predicted value should retain all the information pertinent to the label ("$Y$") but nothing else. Thus, the converged value $I^*$ may be set as the mutual information between the labels and the corresponding sample inputs, $I^*=I(X:Y)$, which can be directly computed from the training data. This quantity is usually simply $I(X:Y)=H(Y)$, i.e. the (Shannon) entropy of the labels, when all the data points $X_i$ are different.

The entropy-based loss term is introduced via an additional multiplicative term to the original loss $L_{MSE}$, which is the MSE loss based on the mean squared error between the predicted output label and the optimal labels in the following examples, but may also be a similar loss term quantifying the quality of the predicted output label for approximating the labeling function. Thus, the loss function may be mathematically equivalent or proportional to

$$\mathcal{L} := L_{\mathrm{MSE}} \times (1 + \alpha L_{\mathrm{MI}}), \qquad (5)$$

where $\alpha$ is a hyper-parameter of the model that controls the pressure from the mutual information term, and may be selected e.g. from the range of [0, 20]. Combining the MSE loss with $L_{MI}$ can ensure that minimizing the information is secondary and may therefore control a potential negative effect on the training process.

The variational parameters $\theta$ of the model can be updated based on knowledge of a local loss landscape, e.g. given by the gradient of the loss function on the data $\nabla_\theta \mathcal{L}$.

Using the product rule for the modified loss function in Eq. (5), the gradient can be decomposed as the sum of two terms

$$\nabla_\theta \mathcal{L} = (\nabla_\theta L_{\mathrm{MSE}}) \times (1 + \alpha L_{\mathrm{MI}}) + \alpha L_{\mathrm{MSE}} \times (\nabla_\theta L_{\mathrm{MI}}) \qquad (6)$$

that can be evaluated independently. Here, depending on how the entropy-based data compression term $L_{MI}$ and the mutual information $I(T:X)$ are estimated, the second term might not be straightforward to compute. In particular, if $I(T:X)$ is evaluated by discretizing the variable Z, the loss term $L_{MI}$ can become a discontinuous step function. Its mathematical gradient $\nabla_\theta L_{MI}$ is then vanishing (zero) except on the value of the steps, such that the second term may often not substantially affect the accuracy of the gradient.

Thus, in some examples, instead of optimizing the loss function of Eq. (5), one can avoid computing $\nabla_\theta L_{MI}$ and introduce the entropy-based loss term merely as a "learning scheduling" term or dynamic scaling term in accordance with the first quality based loss term of Eq. (6) to obtain a simplified (partial) loss function gradient:

$$\nabla_\theta \mathcal{L} = (\nabla_\theta L_{\mathrm{MSE}}) \times (1 + \alpha L_{\mathrm{MI}}), \qquad (7)$$

In the loss function gradient of Eq. (7) the role of the entropy-based loss term $L_{MI}$ is now not to modify the shape of the loss landscape, but to control the magnitude of the update based on the quality-based loss term. Thus, the training process may be refined by adapting the learning rate based on the model's proximity to the learned state, when achieving optimal data compression. While the term $\nabla_\theta L_{MSE}$ tells the algorithm about the local features of the loss landscape (e.g. the gradient around its current state), the term $L_{MI}$ can provide information about a global feature (e.g. how far the current model state is from the optimum in terms of data compression).

The entropy-based loss term can dynamically adjust the magnitude of the gradient updates in accordance with the mutual information between the features X and the target variable Z, *I(Z:X),* and the estimated ideal mutual information value *I\**. Specifically, when the mutual information *I(Z:X)* is significantly higher than 1\*, indicating that the model retains more information than necessary and is far from a learned state, the adjusted update function can amplify the gradient updates. This acceleration can encourage rapid model adjustment towards minimizing unnecessary information retention, pushing the model closer to the minimal sufficient statistics for the task at hand. Conversely, as the model approaches optimal compression, where *I(T:X)* nears *I\**, the update function can decrease the gradient magnitude, effectively reducing the learning rate. The entropy-based loss term can in some examples contribute to convergence of the model smoothly to an optimal point without overshooting, thereby improving training efficiency and potentially leading to better generalization. Thus, the mutual information term may effectively act as a factor in guiding the pace of learning, promoting that the model's complexity is balanced with its predictive performance throughout the training process.

The training method based on the loss function according to Eq. (5), (7) and (4) was tested using a quantum circuit to solve a binary classification task.

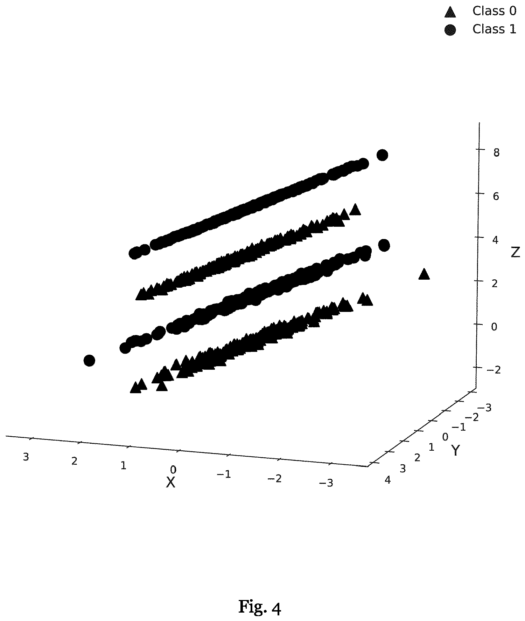

Fig. 4 illustrates an example dataset of *n=800* points $x_i$ scattered in three-dimensional space $x_i=(x_i^{(1)}, x_i^{(2)}, x_i^{(3)})$ in $\in R^3$. Despite the small size of the dataset to avoid long training time, the dataset may contain irrelevant features that can be compressed during training. The dataset consists of four "overlapping" clouds of 200 points each, with two clouds representing the class 0 (*Y=-1*) and the other two representing the class 1 (*Y=1*), as labels to be approximated. Each cloud is sampled from a multivariate normal distribution. In Fig. 4, the dataset is shown from an angle highlighting the separation of the clouds in three-dimensional space, with the different classes 0 and 1 indicated with triangles and solid circles, respectively. The clouds are centered around the point (0, 0) in the *x-y* plane. The z coordinate values for the clouds are set according to the equation *z = $\alpha$ + x cos(60),* where x represents the x coordinates values of the points and $\alpha$ takes values in the interval [0, 2, 4, 6] for each of the four clouds, therefore resulting in four inclined clouds of randomly distributed points which are spaced along a skewed vector with respect to the z-direction.

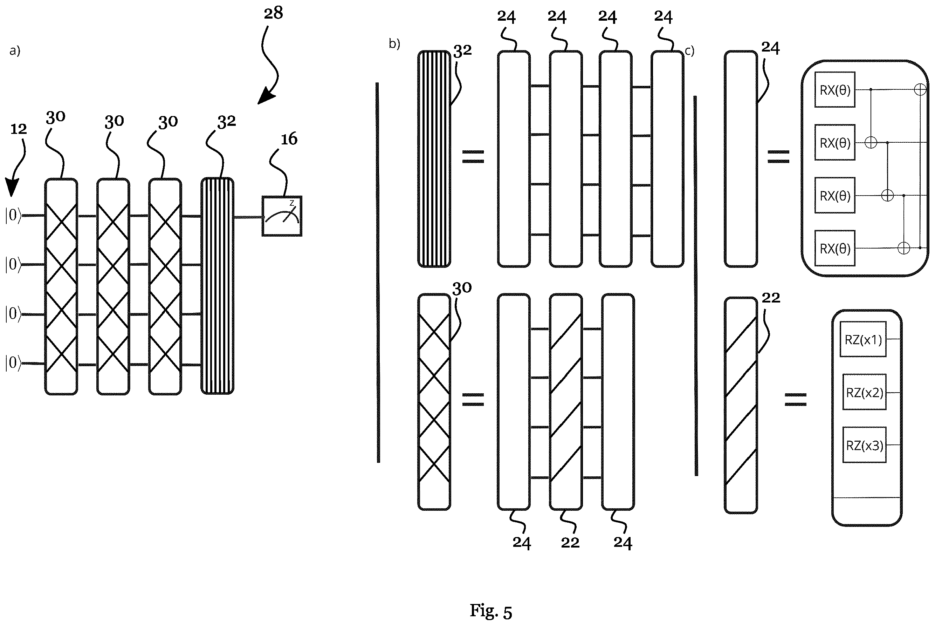

Figs. 5a)-c) illustrate an example architecture for a variational quantum circuit 28 used in the following for approximating the labeling function illustrated in Fig. 4, with subfigures 5a), 5b), and 5c) separated by bold vertical lines. Fig. 5a) shows a high-level structure of the variational quantum circuit 28, and Fig. 5b) illustrates elements of the high-level structure of the variational quantum circuit 28.

The encoding layer 22 and the variational layer 24 are shown in Fig. 5c) in terms of elementary quantum gates, which are then arranged into data re-uploading layers 30 comprising two variational layers 24 with an encoding layer 22 inserted in between, and into a variational layer sequence 32 comprising 4 variational layers 24 in sequence, as shown in Fig. 5b).

A variational layer 24 is composed of a "closed ring" of four CNOT gates preceded by four parametric single qubit gates applied on the individual qubits (with a different parameter associated to each instance of the gate). These gates are chosen to be rotations around the Pauli X operator

$$RX(\theta) = \begin{pmatrix} \cos\dfrac{\theta}{2} & -i\,\sin\dfrac{\theta}{2} \\ -i\,\sin\dfrac{\theta}{2} & \cos\dfrac{\theta}{2} \end{pmatrix} \tag{8}$$

The input data provided as points $x_i$ is encoded into the quantum states of four qubits using multiple encoding layers 22. Each encoding layer 22 inside a respective data re-uploading layer 30 is composed of three-phase gates applied on the first three qubits, that map each feature $x_i^{(k)}$ of the data point on the phase of the corresponding qubit k via the Pauli Z operator

$$RZ(\theta) = \begin{pmatrix} e^{-i\frac{x}{2}} & 0 \\ 0 & e^{i\frac{x}{2}} \end{pmatrix} \tag{9}$$

For each data point $x_i$, the label *Y* is predicted from the sign of the expected value of the Pauli Z operator $\sigma_z$ on the first qubit. The Stochastic Gradient Descent method is used for training. The variational layer 24 is composed of two subsequent variational circuits performing a four-qubit unitary depending on the free variational parameters $\theta$, which are optimized during the training and are different for each variational layer 24. The variational quantum circuit 28 is simulated on classical hardware using the PennyLane framework.

When changing the variational parameters $\theta$, a variational quantum circuit 28 explores a vast subset of the special unitary group $SU(2^4)$, which can enable the whole circuit to learn and adapt to the given classification task.

In the variational quantum 28 the data re-uploading layer 30 encodes the data features into the state of the qubits through the action of the encoding layer 22 and modifies the state of the qubits through the variational layers 24, such as to encode the features of the input data points into a larger Fourier space spanned by the states of the qubits. The variational layer sequence 32 can act as a processing step, extracting significant features or representations from the input data before the state of the first qubit is measured. By iteratively adjusting the parameters based on feedback from the evaluation step, the whole variational quantum circuit 28 can continuously refine its performance and improve its ability to classify the data accurately.

Since all the layers 20 correspond to unitary transformations in the ideal case, at each step of the circuit a data point x is encoded into a pure four qubit state $|\Psi_{\theta,x}>_{Q1,...,Q4}$ also depending on the variational parameter $\theta$. For the purpose of determining the output label for the example shown in Fig. 4 only the marginal state of the first qubit after the variational layer sequence 32 is relevant, on which the final measurement is performed. It can be expressed through the density operator $\rho_{\theta,x} = tr_{Q2Q3Q4} |\Psi_{\theta,x}><\Psi_{\theta,x}|$ which can be expanded with the three Pauli matrices as

$$\rho_{\theta,x} = \frac{1}{2}\left(\mathbb{1} + a_1(\boldsymbol{\theta},\boldsymbol{x})\sigma_x + a_2(\boldsymbol{\theta},\boldsymbol{x})\sigma_y + a_3(\boldsymbol{\theta},\boldsymbol{x})\sigma_z\right), \tag{10}$$

in terms of the three real parameters that define the Bloch vector $\alpha = (a_1, \alpha_2, a_3)$ with $\| \mathbf{a}(\theta,x)\| \leq 1$.

Furthermore, the final measurement being only sensitive to the z-component of the Block vector $<\sigma_z>_{\theta,x} = a_3 (\theta,x)$, this component is considered for the computation of the mutual information. The estimator of the output label is taken to be the sign of the expected value of the z-component of the Block vector

$$\hat{y}_i = sign\langle\sigma_z\rangle_{\theta,x} = \text{sign } a_3(\boldsymbol{\theta},\boldsymbol{x}), \tag{11}$$

and is used to compute the mean squared error term $L_{MSE}$ in the cost function accordingly to

$$L_{\text{MSE}} = \mathbb{E}\left[\left(Y - \hat{Y}\right)^2\right] = \frac{1}{n}\sum_{i=1}^{n}(y_i - \hat{y}_i)^2, \tag{12}$$

To compute the mutual information term $L_{MI}$ the value $a_3$ is discretized down to $m=6$ equal intervals between -1 and 1. Each data point $x_i$ is thus mapped into a value $z_i=1, ..., m$, depending on which interval does the value $a_3(\theta, x)$ falls in. The mutual information on the input data is then computed according to $I(Z:X)=H(Z)+H(X)-H(Z,X)$.

In the example illustrated in Fig. 4, all data points are different and the encoding $X -> Z$ is deterministic. Hence $H(X) =H(Z,X)=log(n)$, and the mutual information is simply given by the entropy of $Z$

$$I(Z:X) = H(Z) = -\sum_{k=1}^{m} \Pr(z_i = k) \log\Pr(z_i = k) \tag{13}$$

where $\Pr(z_i=k)$ is the total number of data points that fall in the interval $k$ divided by the number of samples $n$. This quantity can have a nontrivial behavior as several data points are mapped into the same value $z_i$. Finally, for the example dataset $I^* = I(X:Y)=H(Y)=1$, and the loss function $L$ in Eq. (5) may therefore simply be computed based on the (Shannon) entropy of the predicted values $Z$ as candidate outputs.

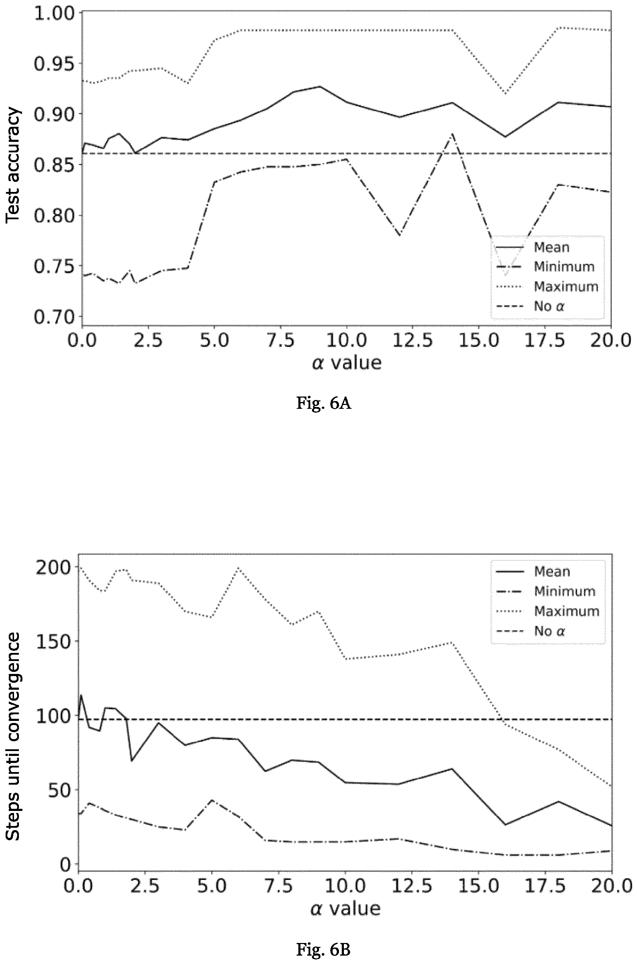

Fig. 6A illustrates the test accuracy of the trained machine learning model based on the variational quantum circuit 28 shown in Fig. 5 plotted against the contribution factor $\alpha$ in a range of 0 to 100. The value $a=0$ corresponds to ignoring the mutual information term in Eq. (5) and results in the standard MSE loss function, which defines a baseline for evaluation of the loss function and is highlighted by the horizontal dashed line in Figs. 6A, 6B.

The test accuracy is the accuracy of the model for estimating the output label for data points not part of the training data, given in terms of the average MSE of the candidate output for a plurality of unseen data points. In view of the limited size of the dataset, the models were trained using a total of 10 distinct initial weight configurations sampled from a uniform distribution. The model's performance is then evaluated based on the average test accuracy ("mean") over these 10 trials to reduce the effect of any inadvertent advantage incurred by the (random) choice of initial weights, with the maximum and minimum performing models indicated by corresponding dashed lines in Fig. 6A.

By analyzing the mean, it can be concluded that the accuracy improves as the contribution factor $\alpha$ increases, going from 86% mean test accuracy for $\alpha=0$ up to 93% mean test accuracy at $\alpha=20$. Additionally, it is worth noting that all models with non-zero $\alpha$ values surpass the accuracy achieved by the models with no $\alpha$ (i.e. $\alpha=0$). The results indicate that incorporating a non-zero $\alpha$ may consistently enhance the test accuracy.

Fig. 6B illustrates the number of steps (i.e., number of epochs) required for the machine learning model to converge to its maximum test accuracy, with the same configuration of the variational quantum circuit 28 and test conditions as in Fig. 6A. Notably, incorporating a non-zero $\alpha$ can not only decrease the number of steps taken to converge but may also significantly reduce its standard deviation. With the MSE loss $\alpha=0$, the models need an average of 100 steps to converge. With high $\alpha$, this number drops to less than 50.

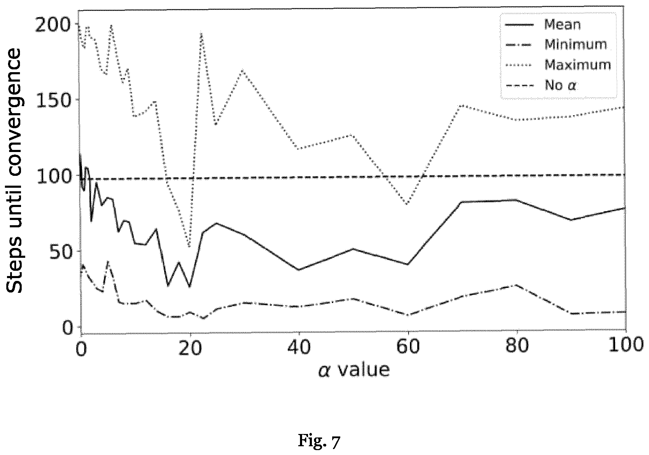

In the investigated example, when testing machine learning models trained with $\alpha$ values exceeding 20, the observed advantage does not appear to increase further, and the standard deviation begins to rise, as illustrated in the example of Fig. 7 for the number of steps required for the machine learning model to converge to its maximum test accuracy.

However, the skilled person will appreciate that the optimal value of $\alpha$ may depend on the complexity of the predicted value (e.g. the number of bits indicative of the candidate output or the number of different output labels to be approximated), the architecture and/or complexity of the variational quantum circuit 28, and/or the number of qubits.

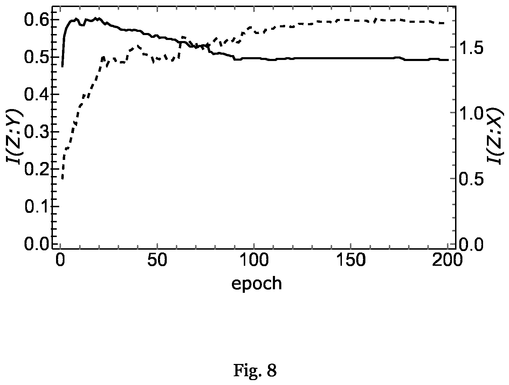

Fig. 8 illustrates the mutual information on the label $I(Z{:}Y)$ and the mutual information on the input data $I(Z{:}X)$ as a function of the training epochs for $\alpha=20$ in solid and dashed lines, respectively. In the simulated results, the MI on the label and on the input data is growing rapidly in the first few epochs. This suggests that a high value of $\alpha$ penalizing high MI on the input data, might limit the learning process at the early stages.

In order to avoid interfering with the initial phase of training a dynamic $\alpha$ can be introduced, e.g. given by

$$\alpha(s) = \begin{cases} \left(\exp\dfrac{\log(\alpha_{\max}+1)\times n}{30}\right) - 1, & \text{if } s \leq 30 \\ \alpha_{\max}, & \text{otherwise} \end{cases} \qquad (14)$$

which can start at a=0 and slowly increases for the first few epochs (given by "s") before reaching a desired value $\alpha_{\max}$ at epochs s=30, where the fitting phase should be over, at least in the example investigated in Fig. 8. Of course, the form of $\alpha$ (s) may be different in embodiments, and may in principle be selected as any function increasing as a function of training epochs, such as a polynomial function and/or monotonically increasing function, and/or may increase starting from a non-zero value.

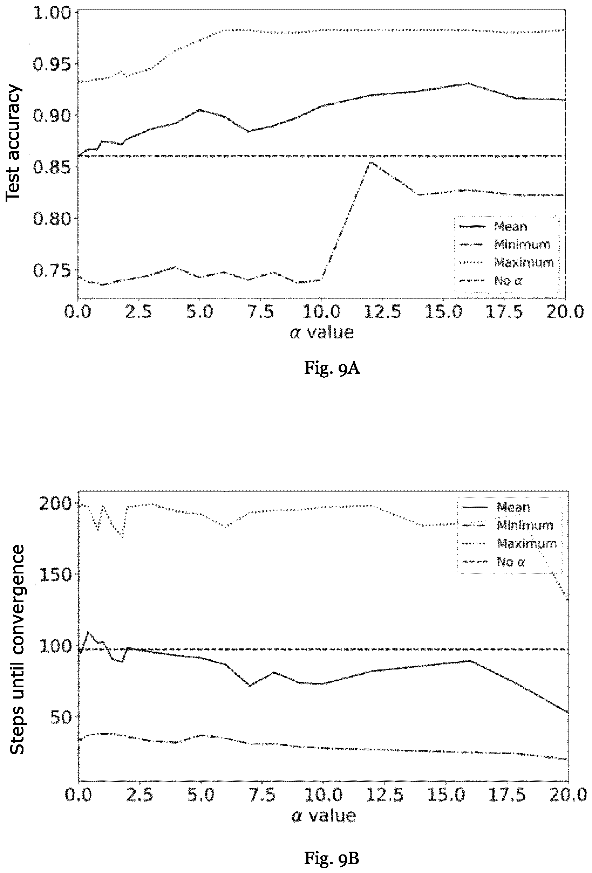

Fig. 9A, 9B illustrates the test accuracy and convergence speed of the trained machine learning model based on the variational quantum circuit 28 shown in Fig. 5 plotted against the contribution factor $\alpha$ with a dynamic contribution factor $\alpha$ as provided by Eq. (12), but otherwise similar to the example illustrated in Figs. 6A, 6B. Along the x-axis, the maximum value of the contribution factor $\alpha_{max}$ is varied. As in Figs. 6A, 6B the value $\alpha_{max}=0$ corresponds to ignoring the mutual information term in Eq. (5) and results in the standard MSE loss function. The result achieved with the MSE loss function defines a baseline for evaluation of the loss function, and is again given by the horizontal dashed line.

When comparing the results in Figs. 9A, 9B with the case of static $\alpha$ in Fig. 6A, a more linear and consistent increase in mean test accuracy can be observed. The results indicate that incorporating a dynamic $\alpha$ can lead to improved stability of the models and higher overall test accuracy. Moreover, for high values of $\alpha$, the test accuracy achieved by the worst models (lower curve in Fig. 9A) is comparable to the mean test accuracy of the models with no $\alpha$, demonstrating significant and reliable test accuracy improvement.

Regarding the convergence speed, depicted in Fig. 9B, a dynamic $\alpha$ appears to have a less significant impact on the convergence rate as compared to the static case. The average number of steps required to converge remains relatively close to the 100 steps baseline across a wide range of $\alpha$ values. The standard deviation is also particularly high. These results are however expected, since introducing a slow onset of the $\alpha$ parameter can delay the influence the MI term which appears responsible for speedup of the model convergence in the case of static $\alpha$.

Finally, the generalization capability of the machine learning models with the loss function of Eq. (5) in terms of the ratio of the training accuracy to the test accuracies is investigated. This quantity can represent the ability of the machine learning model to correctly classify the data on the training versus unseen data. A lower ratio can be an indicator of better generalization.

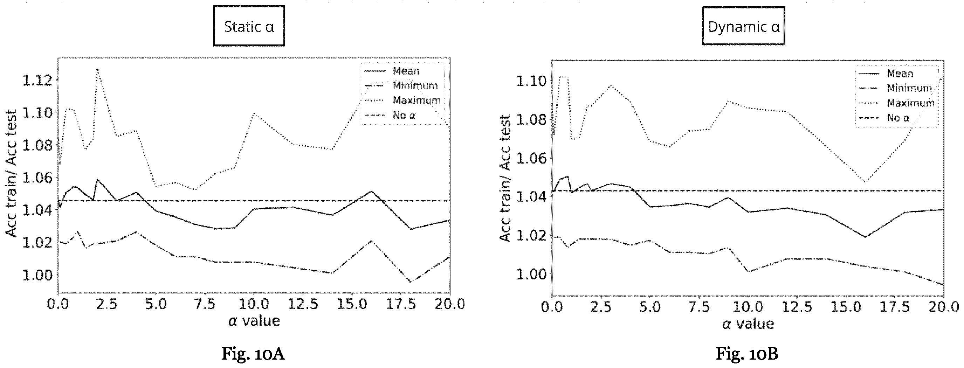

Fig. 10A, 10B illustrate plots of the training and test accuracy ratio for static and dynamic $\alpha$ values, respectively, for the mean values over 10 trials (solid lines). The horizontal dashed line shows the comparative example models with $\alpha = 0$. Maximum and minimum show the best models within various initial weights as well as maximum and minimum values (dotted lines). The training accuracy is the average accuracy of the machine learning model when classifying the data points presented during training, i.e. the average MSE loss achieved when classifying the training data.

The machine learning models with static $\alpha$ appear to, but did not display a conclusive improvement in this metric, as can be understood based on Fig. 10A. In contrast, models with high dynamic $\alpha$ seem to clearly improve generalization. Specifically, in the example illustrated in Fig. 10B a stable decrease in the ratio with increasing $\alpha$ values can be observed.

However, both approaches, static $\alpha$ and dynamic $\alpha$, can improve the performance of the model as compared to the standard case $\alpha = 0$. The results are summarized in the following table.

Table 1

|  | Static $\alpha$ | Dynamic $\alpha$ |
|---|---|---|
| Test accuracy | Increase of 7% over $\alpha = 0$ | Smaller, but more reliable increase than for static case |
| Number of steps to converge | Divided by 2 | Divided by 1.3 |
| Test accuracy after 25 steps | Increase of 13% | Increase of 5% |
| Generalization likely better? | Inconclusive, based on preliminary trials | Yes |

In general, employing a static $\alpha$ leads to an increase in the mean test accuracy of 7% in the investigated examples, while at the same time significantly reducing the number of steps required to converge (by a factor of two in the best case).

On the other hand, utilizing a dynamic $\alpha$ can result in more stable models with respect to mean test accuracy, i.e. reliably showing an improvement in the test accuracy, and can slightly increase the models' generalization capabilities as ascertained based on the training accuracy to test accuracy ratio. An explanation for these enhancements may be that the novel loss function helps the model to compress the information in the input data better.

Nevertheless, in both cases (static and dynamic), $\alpha$ values that are too high appear to eventually deteriorate the model's performance, such that the optimal value for $\alpha$ may be selected carefully, e.g. based on a variation of $\alpha$ as a hyperparameter and/or based on previous implementations, which may also explain why the loss function including the entropy measure, e.g. mutual information, was not investigated successfully previously.

The skilled person will appreciate that generally any machine learning task may be considered as the approximation of an underlying labeling function mapping the input to an (optimal) corresponding output in view of a given task context and that the labeling function may be based on any regression or classification task for a set of input data values. The task of approximating the labeling function may correspond to tasks encountered in classical machine learning, such as image classification, prediction of an optimal action based on a given set of state information, or estimating a solution to a problem considered to be computationally difficult, e.g. estimating parameters of a fluid dynamics problem, satellite mission planning, traveling salesman problems, or drug response prediction, just to give some examples.

The labeling task may for example comprise determining an optimal output label, e.g. an optimal next node during satellite mission planning, based on a set of data values provided to the hybrid quantum classical computation system as the input vector of features, such as a current snapshot state of operating parameters and known information, e.g. the location, of the satellite. As another example, for a regression task, the output of the approximated labeling function may be an approximation of the dependent variable (dependent on the input variables) to be predicted or parameters of a function fitting an (approximated) relationship between the dependent (output variable) and the input variables.

In general a vector of input features reflecting the set of data values may be encoded into the quantum states of the qubits, and the measured output of the variational quantum circuit 28 may be used to determine the output label for the set of input features, which best solves the labeling task based on a previous training process of the variational parameters.

As another example, the machine learning model as shown in Fig. 5 was also trained to predict a probability of a patient having experienced a stroked based on a Dataset including the features: 1) id: unique identifier; 2) gender: "Male", "Female" or "Other"; 3) age: age of the patient; 4) hypertension: 0 if the patient doesn't have hypertension, 1 if the patient has hypertension; 5) heart_disease: 0 if the patient doesn't have any heart diseases, 1 if the patient has a heart disease; 6) ever_married: "No" or "Yes"; 7) work_type: "children", "Govt_Jov", "Never_worked", "Private" or "Self-employed"; 8) Residence_type: "Rural" or "Urban"; 9) avg_glucose_level: average glucose level in blood; 10) bmi: body mass index; 11) smoking_status: "formerly smoked", "never smoked", "smokes" or "Unknown"; 12) stroke: 1 if the patient had a stroke or 0 if not. The target of the prediction is classifying individuals as either "probable to have a stroke" or "not probable", i.e. predicting feature 12) as the output label. The features were mapped to 12 binary features and used to train a machine learning model including a variational quantum circuit 28 using the loss function given in Eq. (5) with a static contribution factor a, showing an improvement in test accuracy from 0.68 to 0.73 in predicting the stroke probability with non-zero

contribution factor $\alpha$ over a loss function without an entropy-based loss term.

The variational quantum circuit 28 may be implemented in quantum hardware. In the preliminary experiments of the inventors, the variational quantum circuit 28s were generally implemented in a simulation of a quantum device running on classical hardware. Even a simulated variational quantum circuit 28 may be beneficial in some examples, and the variational quantum circuit 28 may therefore be implemented on a classical computer using a quantum simulator. However, the system is preferably implemented with the variational quantum circuits 28 implemented in quantum hardware, such as to reduce a classical processing power and computation time required for simulating complex quantum hardware.

On quantum hardware, the output of the variational quantum circuit 28 may be measured as a measured output, e.g. a projection of the qubit state between "0" and "1" for each of the qubits. Said measured output may subsequently be used by a classical portion of a hybrid quantum-classical computation system, i.e. a processing system based on deterministic hardware, to determine an output label corresponding to an input vector of features, e.g. by a pre-determined mapping or using a classical machine learning model for interpreting the output of the variational quantum circuit 28, which may be trained jointly or independently with respect to the variational parameters of the variational quantum circuit 28.

The values of an input vector of features provided to the quantum hardware may be obtained from a set of input data values through a transformation, such as a scaling function, e.g. to scale an input value to a range of angles between 0 and $2\pi$, as part of a suitable normalization function, which may map the input data values to a range of values for angle embedding.

In some examples, the variational quantum circuit 28 may be combined with a classical machine learning classifier, e.g. a neural network based on artificial neurons, to solve the labeling task, such as to process an output of a classical machine learning classifier with the variational quantum circuit 28, provide an output for a classical machine learning classifier based on the measured output of the variational quantum circuit 28, or both. The classical machine learning classifiers may be trained jointly or separately with the optimization of the variational parameters.

In addition, the loss function of Eq. (5) may also be advantageously applied in the training of classical machine learning models, e.g. with an artificial neural network replacing the variational quantum network 28.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

10    system
12    qubit register
14    plurality of quantum gates
16    measurement sensors
18    control system
20    layers of quantum gates
22    encoding layer
24    variational layer
26    sub-vector of input data
28    variational quantum circuit
30    data re-uploading layer
32    variational layer sequence

**Claims**

1. A computer-implemented method for training a machine learning model for approximating a labeling function comprising a variational quantum circuit, said method comprising:

   establishing the variational quantum circuit, the variational quantum circuit comprising a plurality of variational quantum gates, whose action on qubits of the variational quantum circuit is based on associated variational parameters, and a plurality of encoding gates for encoding a sample input in a quantum state of the qubits;
   executing the variational quantum circuit for a plurality of sample inputs;
   for each sample input, determining a candidate output based on a measurable output state of the variational quantum circuit for the sample input;
   determining a quality measure of the candidate outputs for the plurality of sample inputs in view of the labeling function to be approximated by the machine learning model;

determining an entropy measure of the candidate outputs determined for each of the sample inputs; and

updating the variational parameters based on an update function, the update function including a quality-based loss term based on the quality measure and an entropy-based loss term penalizing excess information on the input data encoded in the candidate output through the entropy measure.

2. The method of any one of the preceding claims, wherein an influence of the entropy measure on the value of the update function is tuned based on the quality measure, and/or wherein the update function comprises a multiplication of the entropy measure and the quality measure, or a gradient thereof.

3. The method of any one of the preceding claims, wherein the update function is based on a loss function mathematically equivalent and/or proportional to

$$\mathcal{L} := L_Q \times (1 + \alpha L_E)$$

wherein $L_Q$ is the quality-based loss term based on the quality measure, $L_E$ is the entropy-based loss term based on the entropy measure and $\alpha$ is a contribution factor, wherein $\alpha$ is in particular smaller than 100.

4. The method of claim 3, wherein the contribution factor $\alpha$ is constant or wherein the contribution factor $\alpha$ dynamically increases during training, in particular based on the number of training epochs and/or wherein an increase of the contribution factor is superlinear, in particular an exponential function of the number of training epochs at least for a portion of the training.

5. The method of any one of the preceding claims, wherein the entropy measure is based a statistical property of a plurality of the candidate outputs, wherein the entropy measure is in particular not indicative of a quality of the candidate output for approximating the labeling function given the sample input.

6. The method of any one of the preceding claims, wherein the entropy measure is based on the mutual information of the candidate output and the sample input, in particular mathematically equivalent and/or proportional to

$$I(X : Z) = I(Z : X) = H(X) + H(Z) - H(X, Z)$$

wherein X are the sample inputs, Z are the candidate outputs, and H is the Shannon Entropy $H(x) = E(\log p(x))$, wherein the entropy-based loss term is in particular based on a loss term mathematically equivalent or proportional to

$$L_{E*} := (I(Z{:}X) - I_*),$$

wherein I* is the expected converged value of the mutual information between the candidate outputs Z and the sample inputs X,

wherein the entropy-based loss term is preferably mathematically equivalent or proportional to

$$L_E := (I(Z{:}X) - I_*)^2.$$

7. The method of claim 6, wherein the expected converged value of the mutual information between the candidate outputs Z and the sample inputs X is approximated by the mutual information between the sample inputs X and a plurality of target outputs Y for the sample inputs according to the labelling function, in particular approximated as the entropy of the target outputs.

8. The method of any one of the preceding claims, wherein the sample inputs are different and the entropy measure is independent of the sample inputs, and in particular an entropy measure of the plurality of candidate outputs.

9. The method of any one of the preceding claims, wherein the entropy-based loss term is based on a difference between an entropy of the candidate outputs and an entropy of target outputs for the sample inputs in training data, in particular the difference between the Shannon entropy of the candidate outputs and the target outputs.

10. The method of any one of the preceding claims, wherein the candidate output is determined based on a measurement outcome of a projective measurement of a quantum state of qubits of the variational quantum circuit.

11. The method of any one of the preceding claims, wherein the candidate output is discretized into a plurality of intervals, wherein the number of intervals is greater than the number of intervals indicative of an output label of the labeling function, and the entropy measure is determined based on the plurality of intervals discretizing the candidate output.

12. A system for training a machine learning model including a variational quantum circuit for approximating a labeling function, the system comprising a processing system based on classical hardware configured to:

establish the variational quantum circuit, the variational quantum circuit comprising a plurality of variational quantum gates, whose action on qubits of the variational quantum circuit is based on associated variational parameters, and a plurality of encoding gates for encoding a sample input in a quantum state of the qubits;
train the machine learning model based on a variation of the variational parameters for a plurality of sample inputs;
for each sample input, determine a candidate output based on a measurable output state of the variational quantum circuit for the sample input;
determine a quality measure of the candidate outputs for the plurality of sample inputs in view of the labeling function to be approximated by the machine learning model;
determine an entropy measure of the candidate outputs determined for each of the sample inputs with respect to the plurality of sample inputs; and
update the variational parameters based on an update function, the update function including a quality-based loss term based on the quality measure and an entropy-based loss term penalizing excess information on the input data encoded in the candidate output through the entropy measure.

13. The system of claim 11, wherein the variational quantum circuit is implemented in quantum hardware and wherein the processing system is configured to specify a quantum circuit architecture and/or variational parameters for implementing the machine learning model.

14. The system of claim 11 or 12, wherein training the machine learning model comprises iteratively optimizing the variational parameters of the machine learning model to minimize a loss of the machine learning model when tasked with providing a labeling result given an input feature vector of a set of training data.

15. A computer program comprising machine-readable instructions, which when the computer program is executed by a processing system, cause the processing system to implement a method according to any one of claims 1-11 and/or to implement a system according to any one of claims 12-14.

Fig. 1

Fig. 2

```
┌─────────────────────────────────────────────────────────────────┐
│          establishing the variational quantum circuit            │ ⌐S10
└─────────────────────────────────────────────────────────────────┘
                                │
                                ▼
┌─────────────────────────────────────────────────────────────────┐
│   executing the variational quantum circuit for a plurality of   │ ⌐S12
│                         sample inputs                            │
└─────────────────────────────────────────────────────────────────┘
                                │
                                ▼
┌─────────────────────────────────────────────────────────────────┐
│    determining a candidate output based on a measurable output    │ ⌐S14
│  state of the variational quantum circuit for the sample input    │
│                     for each sample input                        │
└─────────────────────────────────────────────────────────────────┘
                                │
                                ▼
┌─────────────────────────────────────────────────────────────────┐
│  determining a quality measure of the candidate output for the    │ ⌐S16
│   sample input in view of a labeling function to be approximated   │
│              using the variatonal quantum circuit                │
└─────────────────────────────────────────────────────────────────┘
                                │
                                ▼
┌─────────────────────────────────────────────────────────────────┐
│   determining an entropy measure of the candidate outputs          │ ⌐S18
│        determined for each of the sample inputs                  │
└─────────────────────────────────────────────────────────────────┘
                                │
                                ▼
┌─────────────────────────────────────────────────────────────────┐
│    updating the variational parameters based on an update          │ ⌐S20
│   function including a quality-based loss term and an entropy-      │
│                       based loss term                            │
└─────────────────────────────────────────────────────────────────┘
```

Fig. 3

Fig. 4

Fig. 5

Fig. 6A

Fig. 6B

Fig. 7

EP 4 660 895 A1

Fig. 8

Fig. 9A

Fig. 9B

Static α

Dynamic α

Fig. 10A

Fig. 10B

Europäisches
Patentamt

European
Patent Office

Office européen
des brevets

# EUROPEAN SEARCH REPORT

**Application Number**

EP 24 18 0103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/160981 A1 (KORDZANGANEH MOHAMMAD [CH] ET AL) 16 May 2024 (2024-05-16) * the whole document * | 1-15 | INV. G06N10/20 G06N10/60 |
| Y | CLARA MEISTER ET AL: "Generalized Entropy Regularization or: There's Nothing Special about Label Smoothing", ARXIV.ORG, CORNELL UNIVERSITY LIBRARY, 201 OLIN LIBRARY CORNELL UNIVERSITY ITHACA, NY 14853, 2 May 2020 (2020-05-02), XP081657295, * Sections 2-4 * | 1-15 | |
| A | RANA ALI AMJAD ET AL: "Learning Representations for Neural Network-Based Classification Using the Information Bottleneck Principle", ARXIV.ORG, CORNELL UNIVERSITY LIBRARY, 201 OLIN LIBRARY CORNELL UNIVERSITY ITHACA, NY 14853, 27 February 2018 (2018-02-27), XP081014491, * Abstract, Sections 1-4 * | 1-15 | |
| A | Schwartz-Ziv Ravid ET AL: "Opening the black box of Deep Neural Networks via Information", , 29 April 2017 (2017-04-29), XP093225900, Retrieved from the Internet: URL:https://arxiv.org/abs/1703.00810 [retrieved on 2024-11-20] * Abstract, Sections 1, 2 * | 1-15 | |

**TECHNICAL FIELDS SEARCHED (IPC)**

G06N

-/--

The present search report has been drawn up for all claims

| Place of search | Date of completion of the search | Examiner |
|---|---|---|
| The Hague | 21 November 2024 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 18 0103

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAFTALI TISHBY ET AL: "The information bottleneck method", ARXIV.ORG, CORNELL UNIVERSITY LIBRARY, 201 OLIN LIBRARY CORNELL UNIVERSITY ITHACA, NY 14853, 24 April 2000 (2000-04-24), XP080017910, * the whole document * | 1-15 | |
| T | Haboury Nathan ET AL: "Information plane and compression-gnostic feedback in quantum machine learning", arXiv.org, 4 November 2024 (2024-11-04), XP093226715, Retrieved from the Internet: URL:https://arxiv.org/pdf/2411.02313 [retrieved on 2024-11-21] * the whole document * | 1-15 | |

**TECHNICAL FIELDS SEARCHED (IPC)**

The present search report has been drawn up for all claims

| Place of search | Date of completion of the search | Examiner |
|---|---|---|
| The Hague | 21 November 2024 | Efthymiadis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0103

21-11-2024

| Patent document cited in search report | Publication date | Patent family member(s) | | Publication date |
|---|---|---|---|---|
| US 2024160981 A1 | 16-05-2024 | AU | 2023258363 A1 | 30-05-2024 |
| | | CA | 3219411 A1 | 15-05-2024 |
| | | CN | 118052294 A | 17-05-2024 |
| | | EP | 4372622 A1 | 22-05-2024 |
| | | JP | 2024072259 A | 27-05-2024 |
| | | KR | 20240071315 A | 22-05-2024 |
| | | US | 2024160981 A1 | 16-05-2024 |

EPO FORM P0459

For more details about this annex : see Official Journal of the European Patent Office, No. 12/82